# EUROPEAN PATENT SPECIFICATION

(11) **EP 1 291 825 B1**
(45) Date of publication and mention of the grant of the patent: **01.03.2006**
(21) Application number: 01121456.6
(22) Date of filing: 07.09.2001
(51) Int. Cl.: G07C 9/00, G06K 9/00, G07F 7/10

(54) **Card user identification system, host device used for said system, card reader, and card**
System zur Identifikation eines Benutzers mit einer Karte, Hostvorrichtung dafür, Kartenlesergerät und Karte
Système d'identification d'utilisateur de carte, dispositif hôte utilisé avec un tel système, lecteur de cartes, et carte

(43) Date of publication of application: 12.03.2003
(73) Proprietor: Kuraishi, Takashi, Tokyo (JP)
(72) Inventor: Kuraishi, Takashi, Tokyo (JP)
(74) Representative: TER MEER - STEINMEISTER & PARTNER GbR

(56) References cited:
- EP-A- 1 074 949
- US-A- 3 584 958
- US-A- 4 455 083
- US-A- 4 641 350
- US-A- 5 732 148
- US-A- 5 912 981

## Description

### FIELD OF THE INVENTION

The present invention relates to a card user identification system for confirming whether the user of a card such as a credit card or a cash card is the registered cardholder or not, a card reader used for the system, a host device used for the system, and a card used for the system.
Document U.S.-A-5,732,148 discloses an apparatus and method for electronically acquiring fingerprint images, wherein a removable platen is formed as a transparent area on a credit card, passport or identification card or as a separate card. The portable platen on the card is inserted over an imaging area of the direct fingerprint reader. Light from the direct fingerprint reader passes through an optical surface formed on the underside of the portable platen, is reflected off the fingerprint and passes back through the optical surface to the imaging apparatus where the image is digitized and analyzed.
Moreover, document EP-A-1 074 949 discloses an integrated circuit card which is accessed by a card reader that is capable of establishing a communication with a host computer and which includes a card body, a memory device, a fingerprint sensor, a card reader interface circuit and a processing unit being connected to the memory device, the fingerprint sensor and the card reader interface circuit. The memory device stores fingerprint reference data obtained by scanning a fingerprint of an assigned user, and card information therein. The fingerprint sensor scans a fingerprint of a holder of a card body and generates fingerprint scan data. A card reader interface circuit is activable so as to communicate with the card reader. The processing unit receives the fingerprint scan data from the fingerprint sensor and compares them with the fingerprint reference data in the memory device to varify if the holder of the card body is the assigned user. The processing unit activates the card reader interface circuit for exchanging the card information with the host computer via the card reader upon verifying that the holder of the card body is the assigned user.
Document U.S.-A-3,584.958 discloses an indentification system for identifying an individual. The system includes record means for containing a coded representation of the individual's fingerprint, means for taking the individual's fingerprint at the time an identification is to be made, comparison means for comparing the two fingerprints, and indicating means for indicating an identity or lack of identity between the two fingerprints.

A personal identification number is used as a means for identifying that the user of a card such as a credit card or a cash card is the registered cardholder. However, according to the personal identification number system, when the card is stolen or lost and the card is in the hand of a stranger, and when he/she steals or breaks the identification number, there is no way to accurately verify that the card user is the true cardholder. A more secure card user identification system is known where a fingerprint reader is equipped to a terminal device for reading the fingerprint of the card user, utilizing the fingerprint either marked on the card when the user uses the card or by the user pressing a finger on the fingerprint reader each time when using the card, and checking the data related to the fingerprint pattern registered in advance. However, these prior art systems have problems, and proposals for solving the prior art problems are disclosed in Japanese Patent Laid-Open Publication Nos. 5-266475, 7-220039, and 9-147072.

For example, the system disclosed in Japanese Patent Laid-open Publication No. 5-266475 comprises a fingerprint image reading unit for reading the fingerprint image marked on the fingerprint portion of the surface of the card-type substrate in order to obtain the fingerprint data, a fingerprint data reading unit for reading the fingerprint data recorded in the optical recording unit of the card-type substrate surface, a comparison unit for detecting whether the fingerprint data read from the fingerprint portion of the fingerprint image reading unit and the fingerprint data provided by the optical recording unit of the fingerprint data reading unit coincide, and a card cleaning function for erasing the fingerprint image provided to the fingerprint unit, wherein the system authorizes access when the fingerprint data coincide at the comparison unit.

Further, the system disclosed in Japanese Patent Laid-Open Publication No. 7-220039 comprises a fingerprint memory unit for recording the fingerprint corresponding to each identification number of the registered user, an identification number input unit for inputting the identification number, a reader unit for reading the fingerprint impressed on the card surface, and an identification unit for verifying the fingerprint input from the reading unit and the fingerprint output by a reader unit from the fingerprint memory unit corresponding to the identification number input to the identification number input unit, wherein the fingerprint image of the fingerprint impressing unit is erased after the verification process.

Moreover, the system disclosed in Japanese Patent Laid-Open Publication No. 9-147072 comprises creating a cryptographic key corresponding to the combination of the input fingerprint information and the attribute of the user authentication card, encrypting predetermined information within the user authentication card by the encryption key within the cryptograpic key, transmitting the encrypted predetermined information, the non-encrypted predetermined information and the user ID corresponding to the input fingerprint from the terminal to the center device, utilizing the public key corresponding to the user ID that has been received from the terminal device so as to composite the received encrypted predetermined information, comparing the composite predetermined information and the non-encrypted predetermined information being received, and determining that the person is authenticated when the data are identical.

According to the above-mentioned systems, the surface of the fingerprint impressing member is flat, and the oil oozed from the human body is used to mark the fingerprint. The fingerprint impressing unit is coated by Teflon and the like.

According to such system, in order to improve the reading accuracy of the fingerprint pattern, it is necessary to impress the fingerprint on a surface having no noise, and after verifying it with the fingerprint sealed on the card to identify the user, the fingerprint is erased.

However, in order to improve the reading accuracy of the fingerprint pattern, it is necessary to always secure a state where no defect appears on the fingerprint impressing unit or no foreign matter is adhered on the unit. The defect or foreign matter on the fingerprint impressing unit causes noise in reading the fingerprint image, and therefore deteriorates the, reading accuracy.

Moreover, regarding the means for cleaning the fingerprint impressing surface after each use, the fingerprint impressing surface must be cleaned repeatedly, and if the card is used frequently, the cleaning may cause defect creating noise on the fingerprint impressing surface, thereby deteriorating the reading accuracy of the fingerprint pattern.

In order to prevent the occurrence of problems such as defects formed on the fingerprint impressing surface or foreign matter adhered to the surface, many restrictions must be set regarding the method of maintaining and storing the card, the method of handling the card, the method of cleaning the surface when erasing the fingerprint, etc., which is actually impossible to realize.

### SUMMARY OF THE INVENTION

The present invention aims at solving the above problems by providing a card user identification system using fingerprint verification, wherein the reading accuracy of the fingerprint pattern impressed on the card is not deteriorated even after using the card for a long time.

In order to solve the above problems, the present invention provides a card user identification system comprising the features of claim 1.
A respective card user identification process which uses this card user identification system comprises the features of claim 3.

### BRIEF DESCRIPTION OF THE DRAWINGS

FIG. 1 is a block diagram explaining the card user identification system according to the first embodiment of the present invention;
FIG. 2 is a vertical cross-sectional view explaining the structure of the fingerprint impressing member used in the card user identification system according to the present invention;
FIG. 3 is a vertical cross-sectional view explaining the structure of the impressing member adhering means of the card reader used in the card user identification system according to the present invention;
FIG. 4 is a vertical cross-sectional view explaining the structure of the impressing member removing means of the card reader used in the card user identification system according to the present invention;
FIG. 5 is a flowchart explaining the user identification process in the card user identification system according to the first embodiment of the present invention;
FIG. 6 is a flowchart explaining the user identification process in the card user identification system according to the second example according to the first embodiment of the present invention;
FIG. 7 is a block diagram explaining the structure of the card user verification system according to the second embodiment of the present invention; and
FIG. 8 is a flowchart explaining the user verification process of the card user verification system according to the second embodiment of the invention.

### DETAILED DESCRIPTION OF PREFERRED EMBODIMENTS

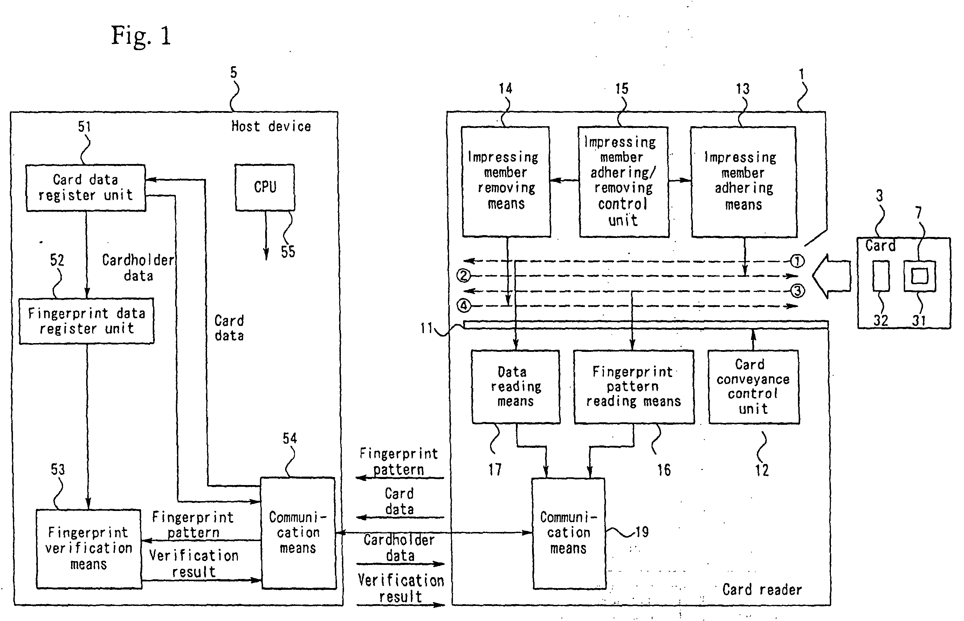

The card user identification system according to the present invention will now be explained with reference to the accompanied drawings. FIG. 1 is used to explain the first embodiment of the present invention in which the fingerprint verification is performed at a host device to which the card reader is connected.

The card user identification system comprises a card reader 1, a card 3, and a host device 5 to which the card reader 1 is connected.

The card reader 1 includes a card conveyance means 11, a card conveyance control unit 12, an impressing member adhering means 13, an impressing member removing means 14, an impressing member adhering/removing control unit 15, a fingerprint pattern reading means 16, a data reading means 17, and a communication device 19. Moreover, the card reader 1 holds the function and the structure of a conventional card reader.

The card conveyance means 11 is capable of sticking and unsticking the fingerprint impressing member 7 on and off the card 3, and further comprises the same structure as the card conveyance means of a conventional card reader. A card inserting/ejecting slit 111 is formed on one end of the card conveyance unit 11.

The card conveyance control means 12 is for controlling the operation of the card conveyance means 11, which achieves this function by a CPU not shown in the drawing but provided within the card reading unit 1.

The impressing member adhering means 13 is a means for sticking the fingerprint impressing member 7 onto the impressing member adhering portion 31 of the card 3.

The impressing member removing means 14 is for removing the fingerprint impressing member 7 after use from the impressing member adhering portion 31 of the card 3.

The impressing member adhering/removing control unit 15 is a means for controlling the operation of the impressing member adhering means 13 and the impressing member removing means 14. This function is achieved by a CPU not shown in the drawing but provided within the card reader 1.

The fingerprint pattern reading means 16 is for reading the fingerprint pattern impressed on the fingerprint impressing member 7 adhered to the card 3.

The data reading means 17 holds the function to read the various card data stored in the data memory unit 32 of the card 3, such as the identification information of the cardholder.

The communication means 19 is for transmitting to and receiving from the host device various data and signals.

The card 3 comprises the function of a conventional card with a data memory unit 32, but is characterized in having an impressing member adhering portion 31. According to the present embodiment, the data memory unit 32 of the card 3 stores the identification data of the cardholder and the like.

The host device 5 comprises a card data register unit 51, a fingerprint data register unit 52, a fingerprint verifying means 53, a communication means 54, and a CPU 55.

The card data register unit 51 comprises a memory means to which various data related to the card is stored, including the personal identification number corresponding to the card identification data which is inherent to the card 3.

The fingerprint data register unit 52 stores the fingerprint data created based on the fingerprint pattern taken from the cardholder in advance, in correspondence with the cardholder or the card identification data.

The fingerprint verification means 53 verifies the fingerprint pattern of the user read by the fingerprint pattern reading means 16 and transmitted from the card reader 1 via a communication means 19 and a communication means 54 with the fingerprint data stored in the fingerprint data register unit 52, thereby determining whether the data coincide.

The communication means 54 is a means used for transmitting to and receiving from the card reader 1 various data and signals.

The CPU 55 controls the whole operation of the host unit 5.

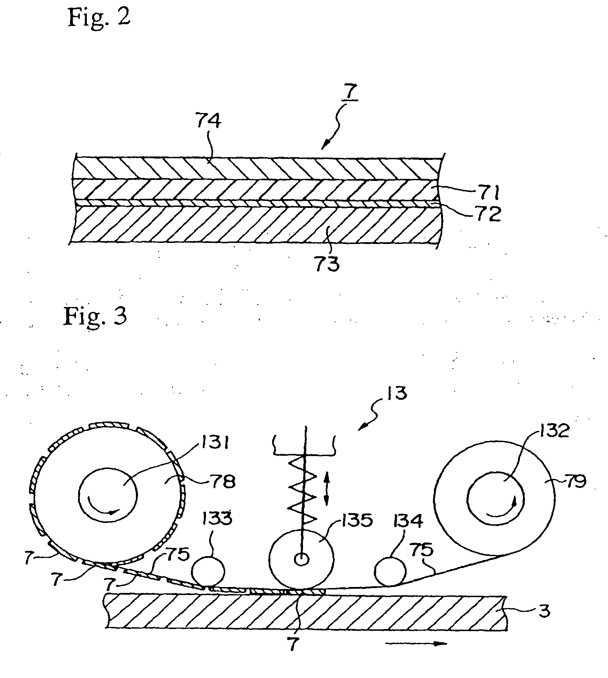

The structure of the fingerprint impressing member 7 is explained with reference to FIG. 2 showing the cross-sectional view thereof. The fingerprint impressing member 7 has a base 71 formed of resin film, and on one surface thereof is provided a transmission block surface 72 that blocks light by metal evaporation and the like so as to prevent the defect or foreign matter on the card surface from being transmitted to the resin film 71 and causing noise when reading the fingerprint. On the side of the base 71 to which the transmission block surface 72 is provided is mounted an adhesive layer 73 which adheres to the impressing member adhering portion 31 of the card 3. Further, a fingerprint impressing layer 74 formed of a flexible material can be provided on the other side of the fingerprint impressing member so as to enable the fingerprint to be impressed clearly.

The fingerprint impressing layer 74 is created so that the secretion oozed from the skin adheres thereto. The material forming the surface of the fingerprint impressing layer 74 of the fingerprint impressing member 7 is selected so that the latent fingerprint formed by the secretion oozed from the skin adheres easily and the latent fingerprint can be detected easily.

The fingerprint impressing member 7 can be provided with a layer of parting film preventing the layers from sticking onto one another when rolled into a roll-like shape. The fingerprint impressing members 7 are formed on the parting film into predetermined sized shapes with predetermined intervals between one another.

One example of the structure of the impressing member adhering means 13 will be explained with reference to FIG. 3. The impressing member adhering means 13 comprises a sender shaft 131 to which a roll 78 of the fingerprint impressing member 7 is mounted, a take-up shaft 132 to which the parting film 75 is taken up to form a roll 79, guide rollers 133 and 134 arranged so that the fingerprint impressing member 7 is positioned maintaining a predetermined distance with the card 3, and a pressing roller 135 for pressing the fingerprint impressing member onto the impressing member adhering portion 31 of the card 3.

The fingerprint impressing member 7 placed on the parting film 75 is positioned under the pressing roller 135, and when the impressing member adhering portion 31 of the card 3 moves under the pressing roller 135, the pressing roller 135 is pressed down, adhering the fingerprint impressing member 7 onto the impressing member adhering portion 31 of the card 3. Thereby, the fingerprint impressing member 7 can be adhered accurately to the impressing member adhering portion 31 of the card 3.

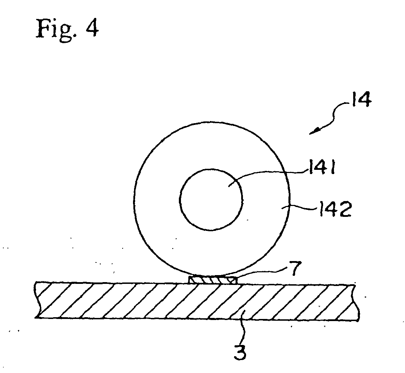

FIG. 4 is used to explain one example of the impressing member removing means 14. The impressing member removing means 14 comprises a rotary shaft 141 and a removing roller 142 mounted to the rotary shaft and having an adhesive material applied to the surface thereof. When the card 3 being conveyed by the card conveyance means 11 comes under the roller 142, the fingerprint impressing member 7 adheres to the surface of the roller 142 and is peeled off from the card 3. Even when many fingerprint impressing members 7 being removed is adhered on the surface of the roller 142, the roller is capable of continuing the removing process since the adhesive layer 73 of the fingerprint impressing members 7 is positioned on the surface of the roller.

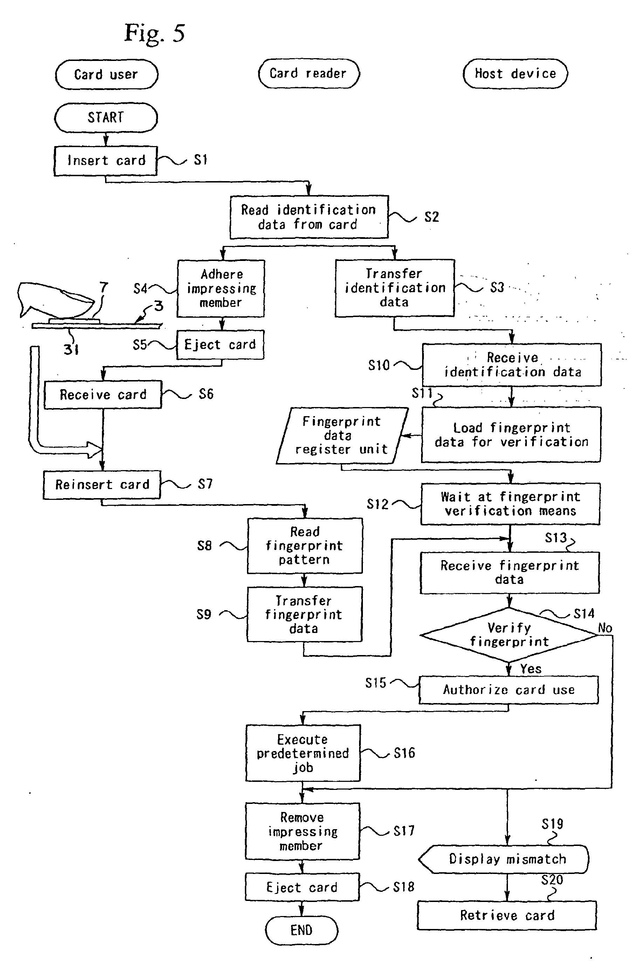

Next, FIG. 5 is referred to in explaining the first embodiment of the card user identification process according to the card user identification system of the first embodiment. When using the card, the user inserts the card 3 into the card inserting/ejecting slit 111 of the card reader 1 (step 1).

The data reading means 17 of the card reader 1 reads various data such as the identification data of the cardholder from the data memory unit 32 of the card (step 2).

The card reader 1 transfers the retrieved identification data via a communication means 19 to the host device 5 (step S3).

The card reader 1 adheres the fingerprint impressing member 7 onto the impressing member adhering portion 31 of the card 3 (step S4), and ejects the card once (step S5).

The card user receives this card for example by pulling out the ejected card (step S6), and inserts the received card again into the card reader 1 (step S7). At this time, the fingerprint of the card user is impressed to the fingerprint impressing member 7.

Upon receiving the reinserted card 3, the card reader 1 reads the fingerprint pattern of the card user (step S8), and transfers the retrieved fingerprint data of the card user via the communication means 19 to the host device 5 (step S9).

The host device 5 receives the identification data sent from the card reader 1 in step S3 (step S10), and based on the identification data, retrieves the fingerprint data being the object of verification from the fingerprint data register unit 51 of the host device 5 (step S11), and loads the fingerprint data to the fingerprint verification unit 53, waiting for the fingerprint pattern data to be transferred from the card reader 1 (step S12).

Upon receiving the fingerprint pattern data from the card reader 1 in step S9 (step S13), the host device 5 verifies the data with the fingerprint data registered in the fingerprint verification unit 53 (step S14).

When the fingerprints coincide as a result of the verification, the use of the card is authorized (step S15), and the predetermined operation is executed (step S16).

When the predetermined operation is terminated, the impressing member is removed by the impressing member removing means 14 (step S17), and the card is ejected (step S18) and the process is finished.

As a result of the fingerprint verification in step S14, when the fingerprint of the card user does not match the registered fingerprint of the cardholder, the card is either returned to the user after peeling off the impressing member according to the process following step S17, or the card is retrieved (step S20) after displaying that the fingerprints do not match (step S19).

According to the present embodiment, the card user is identified using the fingerprint of the user, which is a very effective way to identify an individual, so even if the card is stolen, unauthorized use of the card is impossible, which was possible conventionally by stealing or decoding the personal identification number. According further to the present embodiment, upon obtaining the fingerprint pattern of the user, since the fingerprint is impressed on a fingerprint impressing member that is changed to a new one every time, unauthorized use of the fingerprint pattern adhered fo the card before inserting the card is prevented. Moreover, since the fingerprint impressing member 7 having the fingerprint pattern impressed thereto is removed before the card is ejected after retrieving the fingerprint pattern, the fingerprint of the card user will not remain on the card and unauthorized use of the card is thereby prevented.

According to the present embodiment, the registered fingerprint data is maintained at the host device 5 and the fingerprint verification process is also performed at the host device 5, so the registered fingerprint data will not be transmitted via the communication line, and there is no possibility that the registered fingerprint data accidentally leaks out of the host device 5, thereby enabling the registered fingerprint data to be administered tightly. Moreover, according to the present embodiment, when the fingerprints do not coincide as a result of the fingerprint verification, the card reader 1 retrieves the card 3 and the fingerprint of the unauthorized user will be collected, which may deterrent unauthorized use of the card.

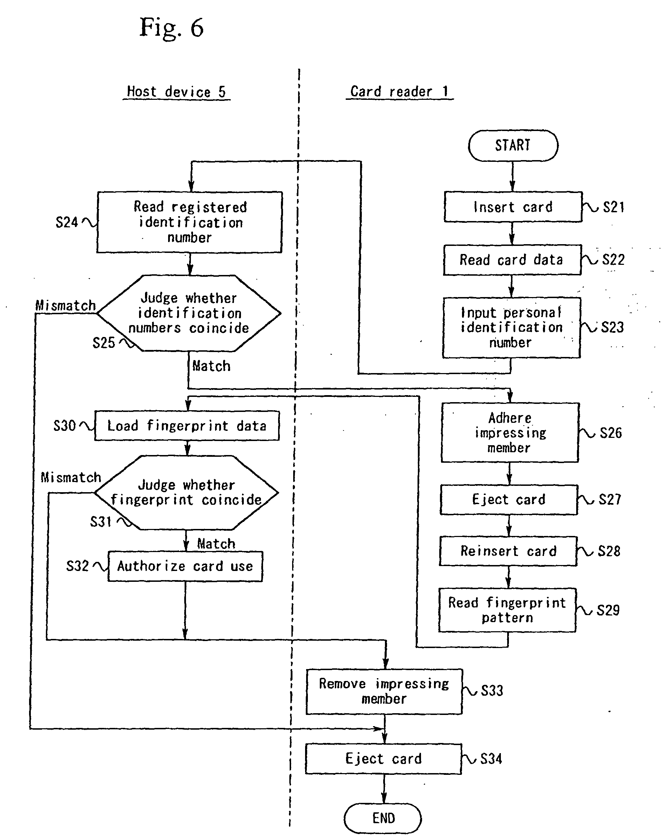

Next, FIG. 6 is referred to in explaining the second embodiment of the card user identification process of the card user identification system according to the first embodiment of the invention shown in FIG. 1. The present embodiment identifies the card user using two methods regarding the fingerprint verification and an identification number, improving the identification accuracy of the card user.

Upon use of the card, the user inserts the card 3 to the card inserting/ejecting slit 111 of the card reader 1 (step S21).

The data reading means 17 of the card reader 1 retrieves the identification data of the cardholder from the data memory unit 32 of the card (step S22).

The card reader 1 prompts the user to input the identification number, and the user inputs the identification number (step S23). The card reader 1 transmits the identification data of the cardholder obtained at step S22 and the identification number input at step S23 to the host device 5.

The host device 5 loads the personal identification number of the cardholder registered to the card data register unit 51 with reference to the identification number of the user (step S24), and the loaded identification number is compared with the number being input by the user, thereby judging whether the numbers match (step S25).

When the identification numbers do not coincide, the mismatch of the numbers is transmitted to the card reader 1, and the card reader 1 ejects the card on the basis that the identification numbers do not coincide (step S34), and the process is terminated.

When it is judged at step S25 that the identification numbers coincide, the matching of the numbers is transmitted to the card reader 1, and the card reader 1 adheres the fingerprint impress ing member onto the impressing member adhering portion 31 of the card 3 (step S26), before ejecting the card once (step S27).

The user holds the card 3 so that his/her fingerprint, is impressed to the fingerprint impressing member 31 adhered to the card 3, and then reinserts the card 3 into the card inserting slit 111 of the card reader 1 (step S28).

The card reader 1 reads the fingerprint pattern of the user impressed to the fingerprint impressing member 31 at the fingerprint pattern reading means 16 (step S29), and transmits the same to the host device 5.

The host device 5 reads the fingerprint data of the cardholder from the fingerprint data register unit 52 (step S30) and determines whether the fingerprints coincide (step S31).

When the fingerprints coincide, the authorization for using the card is output (step S32), and the card reader 1 removes the fingerprint impressing member from the card 3 after performing the set of processes related to the use of the card (step S33), and then ejects the card (step S34) before terminating the process.

When it is determined in step S31 that the fingerprints do not coincide, the fingerprint mismatch is reported to the card reader 1, and the card reader 1 removes the fingerprint impressing member (step S33), and ejects the card on the basis that the fingerprints do not coincide before terminating the process.

As mentioned, according to the present embodiment, the fingerprints are matched at the host device, which is advantageous in that not only the identification numbers but also the cardholder and the card user can be confirmed whether or not they correspond, and the registered fingerprint data can be managed integrally at the host device 5.

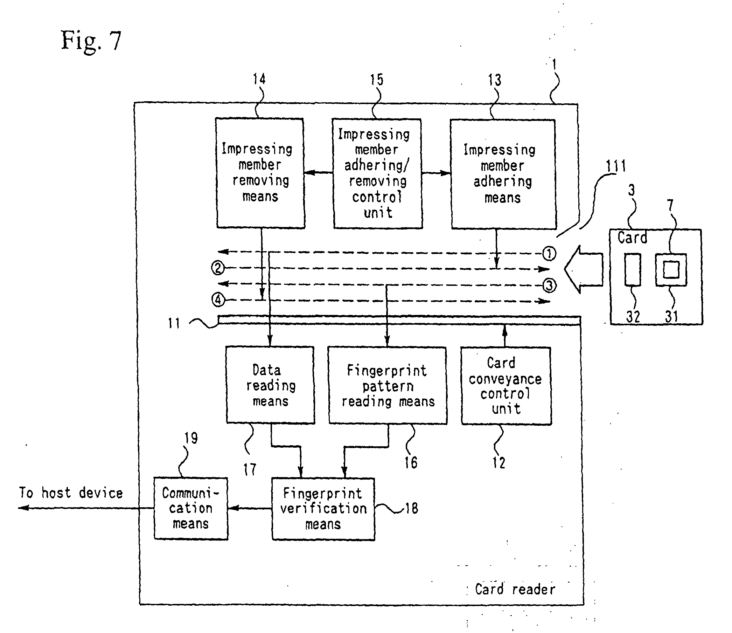

FIG. 7 is referred to in explaining the second embodiment of the card user identification system in which the fingerprint data of the cardholder is stored in the card in advance, and the stored fingerprint data is used to perform the fingerprint verification at the card reader.

The card user identification system comprises a card reader 1 connected to a host device not shown in the drawing, and a card 3.

The card reader 1 comprises a card conveyance means 11, a card conveyance control unit 12, an impressing member adhering means 13, an impressing member removing means 14, an impressing member adhering/removing control unit 15, a fingerprint pattern reading means 16, a data reading means 17, a fingerprint verification means 18, and a communication device 19. Further, the card reader 1 has the function and the structure of a conventional card reader.

In addition to the conventional structure, the card 3 comprises an impressing member adhering portion 31 and a data memory unit 32. A fingerprint impressing member 7 is removably attached to the adhering portion 31.

The card conveyance means 11 is capable of sticking and unsticking the fingerprint impressing member 7 on and off the card 3, and further comprises the same structure as the card conveyance means of a conventional card reader. A card inserting/ejecting slit 111 is formed on one end of the card carrier unit 11.

The card conveyance control means 12 is for controlling the operation of the card conveyance means 11, achieving this function by a CPU not shown in the drawing but provided within the card reading unit 1.

The impressing member adhering means 13 is a means for adhering the fingerprint impressing member 7 onto the impressing member adhering portion 31 of the card 3.

The impressing member removing means 14 is for removing the fingerprint impressing member 7 after use from the impressing member adhering portion 31 of the card 3.

The impressing member adhering/removing control unit 15 is a means for controlling the operation of the impressing member adhering means 13 and the impressing member removing means 14. This function is achieved by a CPU not shown in the drawing but provided within the card reader 1.

The fingerprint pattern reading means 16 is for reading the fingerprint pattern impressed to the fingerprint impressing member 7 adhered to the card 3.

The data reading means 17 is a means for reading the fingerprint data constituted from the fingerprint pattern of the cardholder in advance and stored in the data memory unit 32 of the card 3, and the means further holds the function to read the various card data stored in the data memory unit 32 of the card 3, such as the identification information of the cardholder.

The fingerprint verification means 18 verifies the fingerprint pattern of the user read in by the fingerprint pattern reading means 16 with the fingerprint data read in by the fingerprint data reading means, and judges whether they coincide or not.

The communication means 19 is for transmitting to and receiving from the host device various data and signals.

The fingerprint member adhering portion 31 is formed to have a smooth surface so that the surface of the fingerprint impressing member is flat, and is further coated with a material having high strippability such as Teflon resin, so that the fingerprint impressing member 7 can be removed easily.

The data memory unit 32 stores various data necessary for realizing the card function, such as the data for identifying the cardholder, and further stores the fingerprint data related to the fingerprint pattern of the cardholder, which can be read by the data reading means 17. The data memory unit 32 can be formed as an IC chip, or can be formed as various data recording means such as a magnetic memory means or an optical memory means.

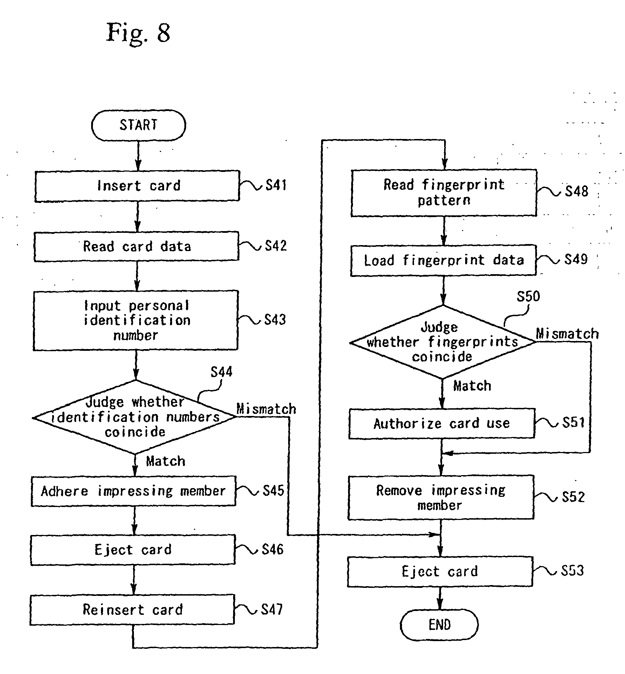

Next, FIG. 8 is used to explain the card user identification process of the card user identification system according to the present invention. Upon using the card, the user inserts the card 3 into the card inserting/ejecting slit 111 of the card reader 1 (step S41).

The data reading means 17 of the card reader 1 reads various data such as the identification data of the card holder from the data memory unit 32 of the card 2 (step S42).

The card reader 1 prompts the user to input his/her personal identification number, and the user inputs the number (step S43).

The card reader 1 compares the personal identification number being input by the user and the identification number received from the host device to which the card reader 1 is connected corresponding to the identification data read in step S2.

When the identification numbers do not coincide, the card is ejected on the basis that the numbers do not correspond (step S53), and the process is terminated.

When the identification numbers match in the judging process of step S4, the fingerprint impressing member 7 is adhered onto the impressing member adhering portion 31 of the card 3 (step S45), and the card is ejected once (step S46).

The card user holds the card 3 so that his/her fingerprint is impressed on the fingerprint impressing member 7 adhered to the card 3, and reinserts the card 3 into the card inserting slit 111 of the card reader 1 (step S47).

The card reader 1 reads the fingerprint pattern of the user impressed to the fingerprint impressing member 7 by the fingerprint pattern reading means 16 (step S48), and loads the fingerprint data from the data memory unit 31 (step S49), thereby judging whether the fingerprints coincide (step S50).

When both fingerprints coincide, the authorization to use the card is output (step S51), and after performing the whole sequential process related to the card use, the fingerprint impressing member 7 is removed from the card 3 (step S52), and the card is ejected (step S53), and the process is terminated.

When in step S50 the fingerprints do not coincide, the fingerprint impressing member is removed (step S52), and the card is ejected on the basis that the fingerprint is mispositioned (step S53), and the process is terminated.

As explained, according to the present embodiment, not only the personal identification numbers but also the fingerprints of the cardholder and the card user are verified, and moreover, the verification of the fingerprints is performed by the card reader 1, so compared to the case where the host device 1 verifies the fingerprints, the process load of the host device 1 is reduced.

According to the first embodiment, the card reader 1 does not have a fingerprint verification function, and the host device 5 comprises the fingerprint verification function and the fingerprint data of the cardholders. The fingerprint pattern of the user read by the card reader 1 (fingerprint data) is transmitted to the host device 5, and the fingerprint verification is performed at the host device 5. Further, according to the second embodiment, the card reader 1 has the fingerprint verification function, and the card 3 stores the fingerprint data of the cardholder, and the fingerprint data of the cardholder loaded from the card 3 and the fingerprint pattern of the card user is verified by the card reader 1.

According to another example, the present invention provides a fingerprint verification function to the card reader 1, and stores the fingerprint data of the cardholders at the fingerprint data register unit 52 of the host device 5. The identification data read by the card reader 1 is transmitted to the host device 5, and the data is used to take out the fingerprint data of the cardholder, which is transmitted to the card reader 1, performing the fingerprint verification at the card reader 1.

In another example, the present invention stores the fingerprint data of the cardholder at the card 3, and the card reader 1 not having the fingerprint verification function is provided with a function to read the fingerprint data of the card user from the card 3, and provides the fingerprint verification function to the host device 5. According to this system, the fingerprint pattern of the user read by the card reader 1 (fingerprint data) and the fingerprint data of the cardholder are sent to the host device 5, and the host device 5 performs the fingerprint verification.

As explained, the present invention provides a "fingerprint verification system" capable of specifying at the time of use of the card whether the card user is truly the cardholder or not. A card 3 is provided with an impressing member adhering portion 31 for adhering the fingerprint impressing member 7 to which the card user impresses his/her fingerprint, and every time the card is used, a new fingerprint impressing member 7 is adhered onto the card, thereby enabling the fingerprint impressing surface to be at good condition regardless of the surface condition of the card-type plate, enabling the impressed fingerprint pattern to be read clearly, improving the reading accuracy of the fingerprint.

Further, upon completing the reading of the fingerprint, the fingerprint impressing member 7 is retrieved by an impressing member removing means having a simple structure, and the card is returned to the user, thereby preventing leakage of the fingerprint caused by uncertain methods such as cleaning of the card, and preventing unauthorized use of the card by a person other than the cardholder who might reuse the fingerprint remaining on the card after use.

The present system requires no special load to be added to the part of the user, and the card user simply needs to (1) insert the card, (2) receive the card being ejected, and (3) reinsert the card, which is much simpler than the conventional method of inputting the personal identification number.

## Claims

1. A card user identification system comprising:
a card (3) including a data recording unit (32) for recording data and an impressing member adhering portion (31) to which a fingerprint impressing member (7) used for impressing the fingerprint of a user at the time of use is removably adhered,
and a card reader (1) for reading said card (3),
wherein said card reader (1) comprises a data reading means (17) for reading the data recorded in the data recording unit (32),
a fingerprint pattern reading means (16) for reading the fingerprint pattern on the fingerprint impressing member (7);
an impressing member adhering means (13) for adhering removably the fingerprint impressing member (7) to the impressing member adhering portion (31) on the surface of said card (3); and
an impressing member removing means (14) for removing said fingerprint impressing member (7) adhered to said card (3);
a host device (5) to which the card reader (1) is connected; and
a communication means (19) for transmitting to and receiving from the host device (5) data and signals.

2. A card user identification system according to claim 1, wherein said card reader (1) further comprises a fingerprint verification function for verifying the fingerprint pattern read by the fingerprint pattern reading means (16) with the fingerprint data of the cardholder registered in advance.

3. A card user identification process of the card user identification system according to one of the preceding claims,
wherein said card user identification system transfers identification data of the card user from the card (3) being inserted in the card reader (1) to a host device (5),
adheres removably said fingerprint impressing member (7) to the impressing member adhering portion (31) of said card (3),
ejects said card (3) from said card reader (1) prompting the user to reinsert the card (3) having his/her fingerprint being imprinted on said fingerprint impressing member (7),
reads the fingerprint pattern of the user from said fingerprint impressing member (7) of said card (3) being reinserted,
retrieves fingerprint data of the cardholder being registered in advance based on the identification data of the card user,
verifies the fingerprint data being read and fingerprint data of the cardholder being registered in advance and authorizes the use of the card if the fingerprints coincide,
and removes said fingerprint impressing member (7) from the card (3) and ejects said card (3) when the process of confirming the card user is finished.

4. A card user identification process of the card user identification system according to claim 3,
wherein said card reader (1) prompts the user to input an identification number and transfers the input identification number to the host device (5),
the host device (5) loads a personal identification number with reference to the identification number of the user,
and the host device (5) judges whether the loaded personal identification number and the transferred identification number input by the user coincide.

5. A card user identification process according to claim 3 or 4, wherein said fingerprint data of the cardholder being registered in advance are registered in the host device (5),
and a fingerprint verification function for verifying the fingerprint data of the user read from the card (3) with the fingerprint data of the cardholder being registered in advance is provided to the host device (5).

6. A card user identification process of the card user identification system according to claim 3,
wherein said card reader (1) prompts the user to input an identification number and receives an identification number from the host device (5),
and the card reader (1) judges whether the loaded personal identification number and the transferred identification number input by the user coincide,
while the fingerprint data of the cardholder being registered in advance are registered in the card (3),
and a fingerprint verification function for verifying the fingerprint data of the user read from the card (3) with the fingerprint data of the cardholder being registered in advance is provided to said card reader (1).

## Patentansprüche

1. Kartenbenutzer-Identifikationssystem, mit:
einer Karte (3) mit einer Kartenspeichereinheit (32) zur Speicherung von Daten und einem Prägeelement-Klebebereich (31), auf welchem ein Fingerabdruck-Prägeelement (7) zum Prägen des Fingerabdrucks eines Benutzers zum Zeitpunkt der Benutzung entfernbar aufgeklebt ist,
und einem Kartenleser (1) zum Lesen der Karte (3),
welcher Kartenleser (1) eine Datenleseeinrichtung (17) zum Lesen der in der Datenspeichereinheit (32) gespeicherten Daten umfaßt,
sowie eine Fingerabdruckmuster-Leseeinheit (16) zum Lesen des Fingerabdruckmusters auf dem Fingerabdruck-Prägeelement (7),
eine Prägeelement-Klebeeinrichtung (13) zum lösbaren Aufkleben des Fingerabdruck-Klebeelements (7) auf den Prägeelement-Klebebereich (31) auf der Oberfläche der Karte (3), und
eine Prägeelement-Ablöseeinrichtung (14) zum Ablösen des auf die Karte (3) geklebten Fingerabdruck-Prägeelements (7);
sowie ferner mit einer Hostvorrichtung (5), mit welcher der Kartenleser (1) verbunden ist; und
einer Kommunikationseinrichtung (19) zur Übertragung und zum Empfang von Daten und Signalen von der Hostvorrichtung (5).

2. Kartenbenutzer-Identifikationssystem gemäß Anspruch 1, bei welchem der Kartenleser (1) ferner eine Fingerabdruck-Verifikationsfunktion umfaßt, zur Verifikation des von der Fingerabdruckmuster-Leseeinrichtung (16) gelesenen Fingerabdruckmusters mit den zuvor gespeicherten Fingerabdruckdaten des Karteninhabers.

3. Kartenbenutzer-Identifikationsverfahren für das Kartenbenutzer-Identifikationssystem gemäß einem der vorstehenden Ansprüche,
bei welchem das Kartenbenutzer-Identifikationssystem Identifikationsdaten des Kartenbenutzers von der in den Kartenleser (1) eingeführten Karte (3) zu einer Hostvorrichtung (5) überträgt,
das Fingerabdruck-Prägeelement (7) lösbar auf den Prägeelement-Prägebereich (31) der Karte (3) aufklebt,
die Karte (3) aus dem Kartenleser (1) auswirft und den Benutzer dazu auffordert, die Karte (3) mit seinem auf den Fingerabdruck-Prägeelement (7) aufgeprägten Fingerabdruck wieder einzuführen,
das Fingerabdruckmuster des Benutzers von dem Fingerabdruck-Prägeelements (7) der wiedereingeführten Karte (3) liest,
vorgespeicherte Fingerabdruckdaten des Karteninhabers auf Grundlage der Identifikationsdaten des Kartenbenutzers abruft,
die gelesenen Fingerabdruckdaten und die vorgespeicherten Fingerabdruckdaten des Karteninhabers verifiziert und die Benutzung der Karte autorisiert, falls die Fingerabdrücke übereinstimmen,
und das Fingerabdruck-Prägeelement (7) von der Karte (3) abgelöst und die Karte (3) auswirft, wenn der Vorgang der Bestimmung des Kartenbenutzers abgeschlossen ist.

4. Kartenbenutzer-Identifikationsverfahren gemäß Anspruch 3,
bei welchem der Kartenleser (1) den Benutzer dazu auffordert, eine Identifikationsnummer einzugeben und die eingegebene Identifikationsnummer an die Hostvorrichtung (5) überträgt,
die Hostvorrichtung (5) eine persönliche Identifikationsnummer mit Bezug zu der Identifikationsnummer des Benutzers lädt,
und die Hostvorrichtung (5) beurteilt, ob die geladene Identifikationsnummer und die vom Benutzer eingegebene übertragene Identifikationsnummer übereinstimmen.

5. Kartenbenutzer-Identifikationsverfahren gemäß Anspruch 3 oder 4, bei welchem die vorgespeicherten Fingerabdruckdaten des Karteninhabers in der Hostvorrichtung (5) gespeichert sind,
und eine Fingerabdruck-Verifikationsfunktion zur Verifikation der von der Karte (3) gelesenen Fingerabdruckdaten des Benutzers mit den vorgespeicherten Fingerabdruckdaten des Karteninhabers in der Hostvorrichtung (5) vorgesehen ist.

6. Kartenbenutzer-Identifikationsverfahren für das Kartenbenutzer-Identifikationssystem gemäß Anspruch 3,
bei welchem der Kartenleser (1) den Benutzer dazu auffordert, eine Identifikationsnummer einzugeben und eine Identifikationsnummer von der Hostvorrichtung (5) empfängt,
und der Kartenleser (1) beurteilt, ob die geladene persönliche Identifikationsnummer und die vom Benutzer eingegebene übertragene Identifikationsnummer übereinstimmen,
wobei die vorgespeicherten Fingerabdruckdaten des Karteninhabers in der Karte (3) gespeichert sind,
und der Kartenleser (1) mit einer Fingerabdruck-Verifikationsfunktion zur Verifikation der von der Karte (3) gelesenen Fingerabdruckdaten des Benutzers mit den vorgespeicherten Fingerabdruckdaten des Karteninhabers versehen ist.

## Revendications

1. Système d'identification d'utilisateur de carte, comportant :
une carte (3) incluant une unité d'enregistrement de données (32) pour enregistrer des données et une partie d'adhérence d'élément d'impression (31) à laquelle un élément d'impression d'empreinte digitale (7) utilisé pour imprimer l'empreinte digitale d'un utilisateur au moment de l'utilisation adhère de manière détachable,
et un lecteur de carte (1) pour lire ladite carte (3),
dans lequel ledit lecteur de carte (1) comporte des moyens de lecture de données (17) pour lire les données enregistrées dans l'unité d'enregistrement de données (32),
des moyens de lecture de motif d'empreinte digitale (16) pour lire le motif d'empreinte digitale sur l'élément d'impression d'empreinte digitale (7),
des moyens d'adhérence d'élément d'impression (13) pour faire adhérer d'une manière détachable l'élément d'impression d'empreinte digitale (7) à la partie d'adhérence d'élément d'impression (31) sur la surface de ladite carte (3), et
des moyens de retrait d'élément d'impression (14) pour retirer ledit élément d'impression d'empreinte digitale (7) qui adhère à ladite carte (3),
un dispositif hôte (5) auquel le lecteur de carte (1) est connecté, et
des moyens de communication (19) pour transmettre au dispositif hôte (5) et recevoir depuis celui-ci des données et des signaux.

2. Système d'identification d'utilisateur de carte selon la revendication 1, dans lequel ledit lecteur de carte (1) comporte de plus une fonction de vérification d'empreinte digitale pour vérifier le motif d'empreinte digitale lu par les moyens de lecture de motif d'empreinte digitale (16) avec les données d'empreinte digitale du titulaire de carte enregistrées à l'avance.

3. Procédé d'identification d'utilisateur de carte du système d'identification d'utilisateur de carte selon l'une des revendications précédentes,
dans lequel ledit système d'identification d'utilisateur de carte transfère des données d'identification de l'utilisateur de carte à partir de la carte (3) insérée dans le lecteur de carte (1) vers un dispositif hôte (5),
fait adhérer d'une manière détachable ledit élément d'impression d'empreinte digitale (7) à la partie d'élément d'adhérence d'impression (31) de ladite carte (3),
éjecte ladite carte (3) dudit lecteur de carte (1) en invitant l'utilisateur à réinsérer la carte (3) en ayant son empreinte digitale imprimée sur ledit élément d'impression d'empreinte digitale (7),
lit le motif d'empreinte digitale de l'utilisateur à partir de l'élément d'impression d'empreinte dispositif (7) de ladite carte (3) insérée,
récupère des données d'empreinte digitale du titulaire de carte enregistrées à l'avance sur la base des données d'identification de l'utilisateur de carte,
vérifie les données d'empreinte digitale lues et les données d'empreinte digitale du titulaire de carte enregistrées à l'avance et autorise l'utilisation de la carte si les empreintes digitales coïncident,
et retire ledit élément d'impression d'empreinte digitale (7) de la carte (3) et éjecte ladite carte (3) lorsque le processus de confirmation de l'utilisateur de carte est terminé.

4. Procédé d'identification d'utilisateur de carte du système d'identification d'utilisateur de carte selon la revendication 3,
dans lequel ledit lecteur de carte (1) invite l'utilisateur à entrer un numéro d'identification et transfère le numéro d'identification entré vers le dispositif hôte (5),
le dispositif hôte (5) charge un numéro d'identification personnel avec une référencé au numéro d'identification de l'utilisateur,
et le dispositif hôte (5) détermine si le numéro d'identification personnel chargé et le numéro d'identification transféré entré par l'utilisateur coïncident.

5. Procédé d'identification d'utilisateur de carte selon la revendication 3 ou 4, dans lequel lesdites données d'empreinte digitale du titulaire de carte enregistrées à l'avance sont enregistrées dans le dispositif hôte (5),
et une fonction de vérification d'empreinte digitale, pour vérifier les données d'empreinte digitale de l'utilisateur lues à partir de la carte (3) avec les données d'empreinte digitale du titulaire de carte enregistrées à l'avance; est fournie au dispositif hôte (5).

6. Procédé d'identification d'utilisateur de carte du système d'identification d'utilisateur de carte selon la revendication 3,
dans lequel ledit lecteur de carte (1) invite l'utilisateur à entrer un numéro d'identification et reçoit un numéro d'identification à partir du dispositif hôte (5),
et le lecteur de carte (1) détermine si le numéro d'identification personnel chargé et le numéro d'identification transféré entré par l'utilisateur coïncident,
tandis que les données d'empreinte digitale du titulaire de carte enregistrées à l'avance sont enregistrées dans la carte (3),
et une fonction de vérification d'empreinte digitale pour vérifier les données d'empreinte digitale de l'utilisateur lues à partir de la carte (3) avec les données d'empreinte digitale du titulaire de carte enregistrées à l'avance, est fournie au lecteur de carte (1)
